# EUROPEAN PATENT SPECIFICATION

(11) **EP 4 520 986 B1**
(45) Date of publication and mention of the grant of the patent: **10.06.2026**
(21) Application number: 24199720.4
(22) Date of filing: 11.09.2024
(51) Int. Cl.: F16C 17/26, F16C 17/24, F16C 32/04, F16C 17/20, F16C 35/02, F16C 39/06

(54) **AIR CYCLE MACHINE (ACM) WITH HYBRID AIRFOIL AND AUXILIARY MAGNETIC THRUST BEARINGS**
LUFTKREISLAUFMASCHINE (ACM) MIT HYBRIDFOLIEN- UND MAGNETISCHEN HILFSAXIALLAGERN
MACHINE À CYCLE D'AIR (ACM) AVEC PALIER HYBRIDE AÉRODYNAMIQUE ET PALIERS AXIAUX MAGNÉTIQUES AUXILIAIRES

(30) Priority: 11.09.2023 US 202318464957
(43) Date of publication of application: 12.03.2025
(73) Proprietor: Hamilton Sundstrand Corporation, Charlotte, NC 28217-4578 (US)
(72) Inventor: KILCHYK, Viktor, Lancaster, NY (US); MERRITT, Brent J., Southwick, MA (US)
(74) Representative: Dehns

(56) References cited:
- US-A1- 2007 069 597

## Description

### BACKGROUND

The present disclosure relates to air cycle machines (ACMs) and, in particular, to an ACM with hybrid airfoil and passive magnetic thrust bearings.

A foil bearing, also known as a foil-air bearing or airfoil bearing, is a type of air bearing. A shaft is supported by a compliant, spring-loaded foil journal lining. Once the shaft is spinning fast enough, the working fluid (usually air) pushes the foil away from the shaft so that no contact occurs. The shaft and foil are separated by high-pressure air, which is generated by the rotation that pulls gas into the bearing via viscosity effects. The high speed of the shaft with respect to the foil is required to initiate the air gap, and once this has been achieved, no wear occurs. Unlike aerostatic or hydrostatic bearings, foil bearings require no external pressurization system for the working fluid, so the hydrodynamic bearing is self-starting. A hybrid bearing is disclosed in US 2007/069597 A1.

### SUMMARY

According to an aspect of the invention, a hybrid airfoil thrust bearing is provided as defined by claim 1.

According to an aspect of the invention, a device is provided and includes a shaft rotatable about a longitudinal axis thereof, a thrust disc disposed along the shaft to rotate with the shaft and a hybrid airfoil thrust bearing as defined above.

In embodiments, a turbine wheel is connected to a first end of the shaft, a compressor wheel is connected to a second end of the shaft and one or more journal bearings is disposed along at least one of the first and second ends of the shaft.

In embodiments, the one or more journal bearings is a hybrid airfoil bearing.

According to an aspect of the invention, an air cycle machine (ACM) is provided and includes a motor, an impeller, a shaft which is rotatable about a longitudinal axis thereof and by which the motor drives impeller rotation, a thrust disc disposed along the shaft to rotate with the shaft and a hybrid airfoil thrust bearing as defined above.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
FIG. 1A is a schematic side view of a hybrid airfoil bearing with axial segmentation in accordance with embodiments;
FIG. 1B is a cross-sectional view of the hybrid airfoil bearing with the axial segmentation taken along line A-A of FIG. 1A in accordance with embodiments;
FIG. 1C is an illustration of magnetic flux lines of the hybrid airfoil bearing with the axial segmentation of FIG. 1A in accordance with embodiments;
FIG. 2A is a schematic side view of a hybrid airfoil bearing with a radial configuration in accordance with embodiments;
FIG. 2B is a cross-sectional view of the hybrid airfoil bearing with the radial configuration taken along line A-A of FIG. 2A in accordance with embodiments;
FIG. 3 is a side view of an aviation motor including hybrid airfoil bearings in accordance with embodiments;
FIG. 4 is a side view of an air cycle machine (ACM) including axially arranged hybrid airfoil bearings in accordance with embodiments;
FIG. 5 is a side view of an air cycle machine (ACM) including radially arranged hybrid airfoil and passive magnetic bearings in accordance with embodiments; and
FIG. 6 is a schematic side view of a hybrid airfoil thrust bearing in accordance with embodiments;
FIG. 7 is a side view of a device including a hybrid airfoil thrust bearing in accordance with embodiments;
FIG. 8 is a side view of a device including a hybrid airfoil thrust bearing in accordance with embodiments; and
FIG. 9 is a side view of an ACM including a hybrid airfoil thrust bearing in accordance with embodiments.

### DETAILED DESCRIPTION

Airfoil bearings have certain limitations. These include a minimum speed to activate, sensitivity to damage due to metal-to-metal contact and/or inadequate thermal management. Active magnetic bearings resolve many of these issues, but have added cost and weight as well as a need for circuitry to provide current for the electromagnet.

Thus, as will be described below, a new type of hybrid airfoil bearing is provided. The hybrid airfoil bearing includes airfoil bearing components and permanent (or passive) magnetic bearing components. The magnetic bearing component use non-controllable repulsion force to improve bearing capacity and reliability. The magnetized components can be incorporated into airfoil components, such as a sleeve and a shaft. In addition, as will be described below, the hybrid airfoil bearing described herein can be installed in an ACM.

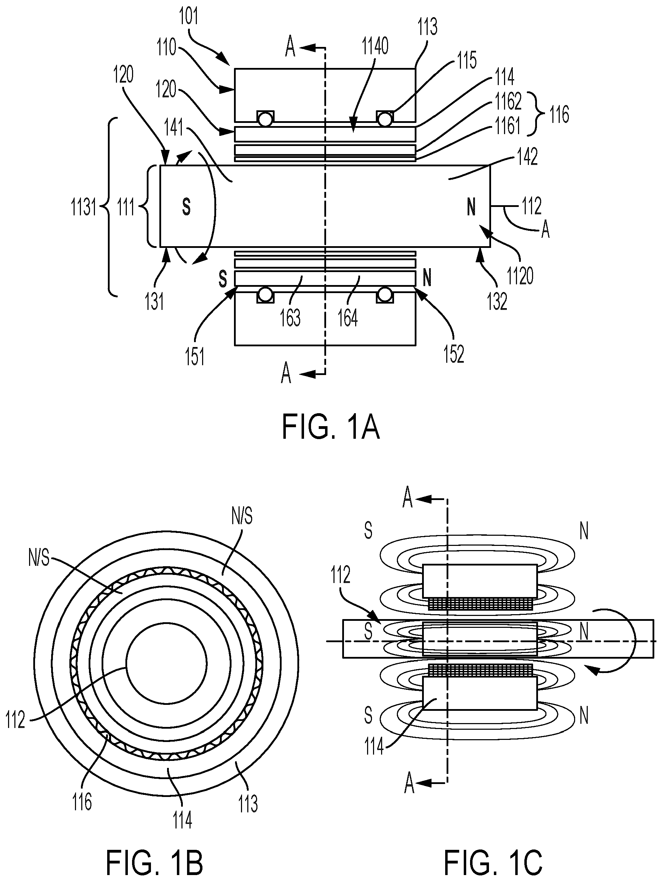

With reference to FIGS. 1A, 1B and 1C, a hybrid airfoil bearing 101 is provided for use with a shaft 112. The hybrid airfoil bearing 101 includes airfoil bearing components 110 and passive magnetic bearing components 120 that are integrated into the shaft 112 and the airfoil bearing components 110. The passive magnetic bearing components 120 can include or be provided with magnetic material that tends to retain its magnetic characteristics during high-temperature and high-pressure operations associated with aviation motors of an aircraft and air cycle machines (ACMs). that are integrated into the shaft 112 and the airfoil bearing components 110The airfoil bearing components 110 include a top foil 1161 (see below) that immediately surrounds the shaft 112 and stationary components that define an inner bore 111. The shaft 112 is rotatable about a longitudinal axis A thereof within the inner bore 111 and relative to the stationary components. The stationary components include a housing 113, such as a motor housing, that defines an outer bore 1131 and a bearing sleeve 114 that is supported within the outer bore 1131. The stationary components further include elastomeric O-rings 115, by which the bearing sleeve 114 is supported within the outer bore 1131, and one or more foils 116 for supporting the shaft 112. The one or more foils 116 include the top foil 1161 and a corrugated bump foil 1162 surrounding the top foil 1161. With the top foil 1161 immediately surrounding the shaft 112, the bump foil 1162 immediately surrounds the top foil 1161. The one or more foils 116 can each include or be provided with high magnetic permeability materials. Additionally or alternatively, the one or more foils 116 can each be provided as a mesh.

The stationary components can also include one more filters that prevent particles, such as magnetic particles, from becoming trapped in the hybrid airfoil bearing 101.

During operation of the airfoil bearing components, if not for the presence of the passive magnetic bearing components 120, the shaft 112 would be supported as a static load by the one or more foils 116 (i.e., the top foil 1161) until the shaft 112 begins spinning or rotating fast enough for working fluid (i.e., air) to push the shaft 112 away from the one or more foils 116 so that no contact occurs. The initial contact between the shaft 112 and the one or more foils 116 (i.e., the static load of the shaft 112 on the top foil 1161) as well as the possibility of a loss of pressure of the working fluid during high-speed rotation of the shaft 112 can lead to wear and damage of the airfoil bearing components 110.

The passive magnetic bearing components 120 serve as auxiliary magnetic bearings to remove the static load of the shaft 112 on the top foil 1161 and to provide for auxiliary rotor or shaft support and emergency operation backup. For example, in case of a temporary loss of capacity due to low-speed rotation, rotor imbalance (surging), etc., the passive magnetic bearing components 120 would eliminate or reduce the chances of unit damage due to failure of the airfoil bearing components 110 maintaining separation of the shaft 112 and at least the top foil 1161 of the one or more foils 116. The passive magnetic bearing components 120 generate a repulsion force between the shaft 112 and at least the top foil 1161 of the one or more foils 116. This repulsion force is proportional to an inverse of a distance between the respective bearing surfaces of the shaft 112 and at least the top foil 1161 of the one or more foils 116 and becomes significant when the shaft 112 deviates from its centered (axial and/or radial) location.

In addition, since the passive magnetic bearing components 120 are integrated into the shaft 112 and the airfoil bearing components 110, the hybrid airfoil bearing 101 can be manufactured easily and without extensive additional costs.

With continued reference to FIGS. 1A, 1B and 1C, the shaft 112 can be provided as an elongate dipole magnet 1120 with a first end 131 and a second end 132 that is opposite the first end 131. At the first end 131, the shaft 112 includes first magnetic materials 141 having a first magnetic pole. At the second end 132, the shaft 112 includes second magnetic materials 142 having a second magnetic pole, which is opposite the first magnetic pole. At least one of the stationary components, such as the bearing sleeve 114 (for purposes of clarity and brevity, the following description will relate to the case in which the at least one of the stationary components is the bearing sleeve 114), can be provided as an elongate dipole magnet 1140 that surrounds the shaft 112 with a first end 151 corresponding to the first end 131 and a second end 152, which is opposite the first end 151 and corresponds to the second end 132. At the first end 151, the bearing sleeve 114 includes third magnetic materials 163 having the first magnetic pole. At the second end 152, the bearing sleeve 114 includes fourth magnetic materials 164 having the second magnetic pole. With this configuration, passive magnetic repulsion of the first magnetic materials 141 and the third magnetic materials 163 and passive magnetic repulsion of the second magnetic materials 142 and the fourth magnetic materials 164 suspends the shaft 112 within the inner bore 111 and maintains separation between the shaft 112 and both the bearing sleeve 114 and the one or more foils 116.

With the shaft 112 being provided as the elongate dipole magnet 1120, the description provided herein is distinguished from conventional cases in which an elongate dipole magnet is attached to or about a shaft. That is, in those conventional cases, passive magnetic components are not integrated into a shaft whereas in the description provided herein the passive magnet components 120 are integrated into the shaft 112 to form the shaft 112 into the elongate dipole magnet 1120.

It is to be understood that additional magnetic materials can be added to an exterior of the shaft 112, but not to the exclusion of passive magnetic materials being integrated into the shaft 112 as described above. It is to be further understood that the passive magnetic materials integrated into the shaft 112 and the bearing sleeve 114 need not be uniformly distributed throughout the shaft 112 or the bearing sleeve 114, particularly in the circumferential dimension. For example, the passive magnetic materials in the shaft 112 and the bearing sleeve 114 can be segmented along an entirety of the circumferential dimension of the shaft 112 and the bearing sleeve 114 and/or localized at one or more circumferential sections of the shaft 112 and the bearing sleeve 114 so that when the shaft 112 comes to rest, the one or more circumferential sections of the shaft 112 and the bearing sleeve 114 align in the vertical direction and remove the load of the shaft 112 on the one or more foils 116 in opposition to the force of gravity.

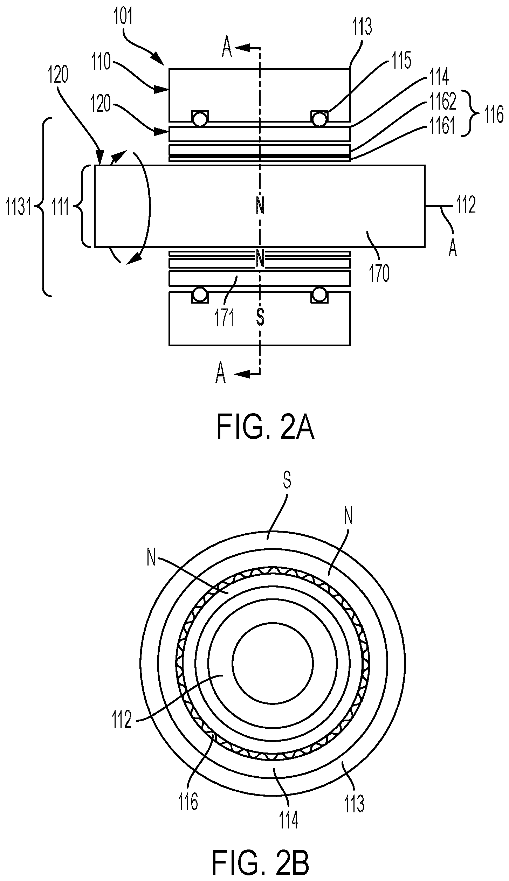

With reference to FIGS. 2A and 2B, the hybrid airfoil bearing 101 is provided with a similar overall configuration as the configuration described above but with a different passive magnetic arrangement. The following description will thus omit the details of the hybrid airfoil bearing 101 of FIGS. 2A and 2B that are already described above.

In FIGS. 2A and 2B, the shaft 112 includes an outer ring of magnetic materials 170 integrated therein and having a first magnetic pole and optionally an inner core of magnetic materials having a second magnetic pole and the bearing sleeve 114 includes an inner ring of magnetic materials 171 having the first magnetic pole and an outer ring of magnetic materials having the second magnetic pole. In this case, passive magnetic repulsion of the outer ring of magnetic materials 171 and the inner ring of magnetic materials 170 suspends the shaft 112 within the inner bore 111 and maintains separation between the shaft 112 and both the bearing sleeve 114 and the one or more foils 116. The shaft 112 can further include a hollow interior within the outer ring of magnetic materials 170 or an inner ring of magnetic materials that is either of a same pole as the outer ring of magnetic materials 170 or an opposite pole as the outer ring of magnetic materials 170. In any case, the shaft 112 does not include any portion formed of non-magnetic materials.

It is to be understood that additional magnetic materials can be added to an exterior of the shaft 112, but not to the exclusion of passive magnetic materials being integrated into the shaft 112 as described above. It is to be further understood that the passive magnetic materials integrated into the shaft 112 and the bearing sleeve 114 need not be uniformly distributed throughout the shaft 112 or the bearing sleeve 114, particularly in the circumferential dimension. For example, the passive magnetic materials in the shaft 112 and the bearing sleeve 114 can be segmented along an entirety of the circumferential dimension of the shaft 112 and the bearing sleeve 114 and/or localized at one or more circumferential sections of the shaft 112 and the bearing sleeve 114 so that when the shaft 112 comes to rest, the one or more circumferential sections of the shaft 112 and the bearing sleeve 114 align in the vertical direction and remove the load of the shaft 112 on the one or more foils 116 in opposition to the force of gravity.

As above, with the shaft 112 including the outer ring of magnetic materials 170 integrated therein, the description provided herein is distinguished from conventional cases in which a ring of passive magnetic materials is attached to or about a shaft of non-magnetic materials. That is, in those conventional cases, passive magnetic components are not integrated into a shaft whereas in the description provided herein the outer ring of magnetic materials 170 are integrated into the shaft 112.

Thus, in general, the shaft 112 and both the bearing sleeve 114 and the one or more foils 116 are respectively configured for passive magnetic repulsion of one another to suspend the shaft 112 within the inner bore 111 and to act as an auxiliary bearing for the airfoil bearing components 110.

It is to be understood that the magnetic materials of the embodiments of FIGS. 1A, 1B and 1C and the magnetic materials of the embodiments of FIGS. 2A and 2B may exhibit variable magnetization in circumferential, axial and/or radial dimensions to accommodate and/or account for possible variable attitude angles of the hybrid airfoil bearing 101.

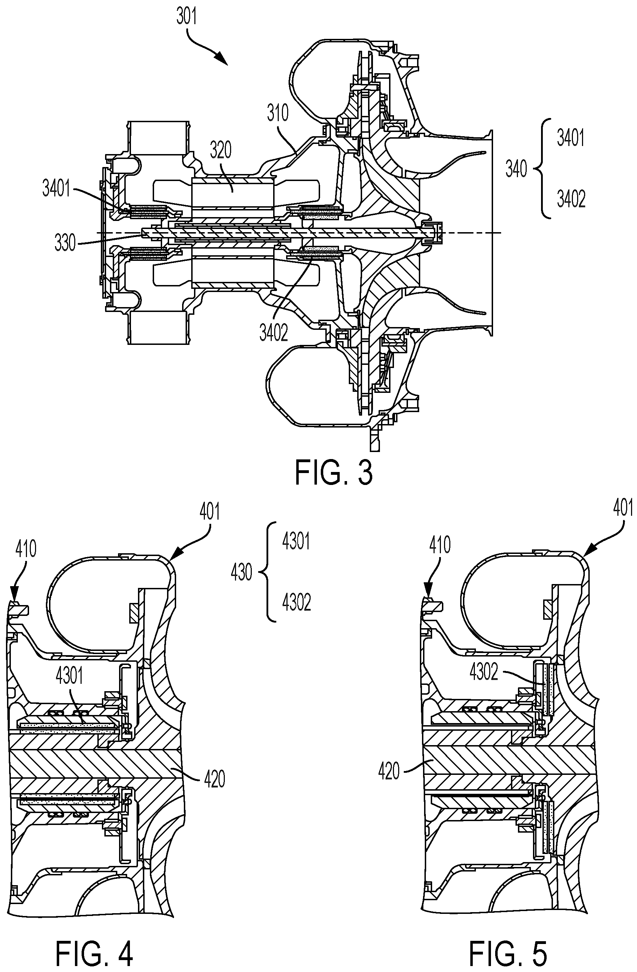

With reference to FIG. 3, a device 301 is provided as an aviation motor of an aircraft and includes a housing 310, a stator 320, a rotor 330 that is rotatable within the housing 310 and one or more hybrid airfoil bearings 340. The stator 320 is configured to generate magnetic flux to drive rotation of the rotor 330. The one or more hybrid airfoil bearings 340 can be provided as first and second hybrid airfoil bearings 3401 and 3402. Each of the first and second hybrid airfoil bearings 3401 and 3402 is configured as described above with reference to FIGS. 1A, 1B and 1C or FIGS. 2A and 2B.

With reference to FIGS. 4 and 5, a device 401 is provided as an ACM and includes a housing 410, a rotor 420 that is rotatable within the housing 410 and one or more hybrid airfoil bearings 430. The one or more hybrid airfoil bearings 430 can be provided as an axially oriented hybrid airfoil bearing 4301 (see FIG. 4) and a radially oriented hybrid airfoil bearing 4302 (see FIG. 5). Each of the axially oriented hybrid airfoil bearing 4301 and the radially oriented hybrid airfoil bearing 4302 is configured as described above with reference to FIGS. 1A, 1B and 1C or FIGS. 2A and 2B. In each case of the hybrid airfoil bearings 430 being used with an ACM, the various sleeves described above can be integrated into the ACM.

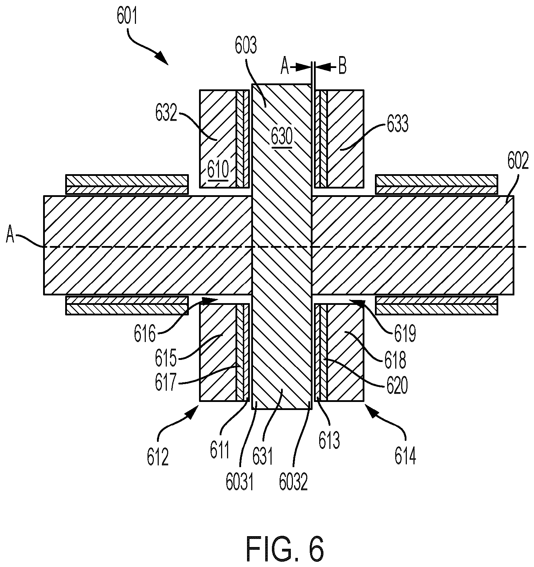

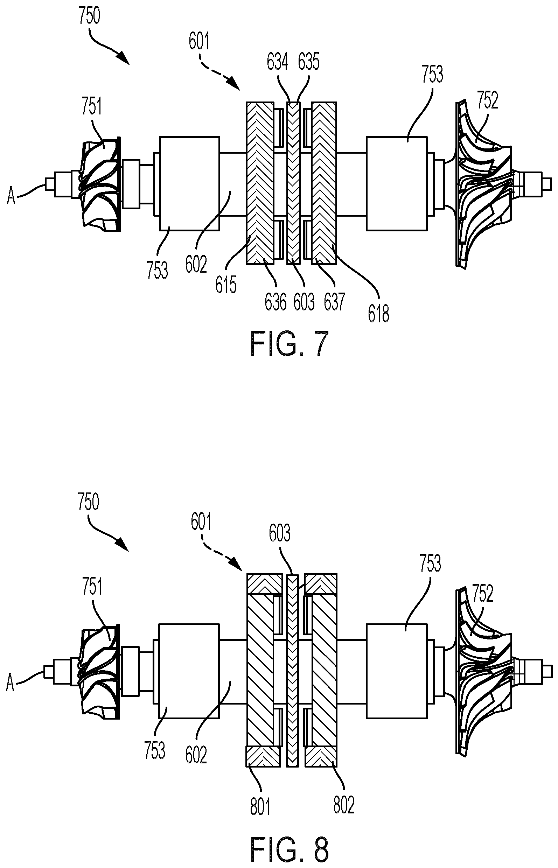

With reference to FIGS. 6 and 7, a hybrid airfoil thrust bearing 601 is provided for use with a shaft 602 that includes a thrust disc 603 that rotates with the shaft 602. The hybrid airfoil thrust bearing 601 generally operates in a similar manner as described above.

The hybrid airfoil thrust bearing 601 includes airfoil bearing components 610 and passive magnetic bearing components 630. The airfoil bearing components 610 include a first top foil 611 immediately adjacent to a first side 6031 of the thrust disc 603 at a distance A-B and surrounding the shaft 602, first additional components 612, a second top foil 613 immediately adjacent to a second side 6032 of the thrust disc 603 at the distance A-B and surrounding the shaft 602 and second additional components 614. The first additional components 612 can include a first thrust bearing 615 defining a first bore 616 and a first bump foil 617, which is axially interposed between the first top foil 611 and the first thrust bearing 615, and the second additional components 614 can include a second thrust bearing 618 defining a second bore 619 and a second bump foil 620, which is axially interposed between the second top foil 613 and the second thrust bearing 618. The shaft 602 is rotatable about a longitudinal axis A thereof within the first and second bores 616 and 619 and relative to the first and second thrust bearings 615 and 618. The passive magnetic bearing components 630 are integrated into the thrust disc 603 and into the first and second additional components 612 and 614 to maintain an axial location of the thrust disc 603 between the first and second top foils 611 and 613 and to thereby remove a static load of the thrust disc 603 on the first top foil 611 and on the second top foil 613.

In accordance with embodiments and as shown in FIG. 6, the passive magnetic bearing components 630 can include passive magnetic materials 631, which are integrated into the thrust disc 603, and passive magnetic materials 632 and 633, which are integrated into each of the first and second thrust bearings 615 and 618, respectively, and have a same polarity as the passive magnetic materials 631 integrated into the thrust disc 603. In this case, passive magnetic repulsion between the passive magnetic materials 631 and the passive magnetic materials 632 and passive magnetic repulsion between the passive magnetic materials 631 and the passive magnetic materials 633 cooperatively maintain the axial location of the thrust disc 603 between the first and second top foils 611 and 613.

In accordance with embodiments and as shown in FIG. 7, the passive magnetic bearing components 630 (see FIG. 6) can include first and second passive magnetic materials 634 and 635 of opposite polarity integrated into the first and second sides 6031 and 6032 of the thrust disc 603 (see FIG. 6), third passive magnetic materials 636 of a same polarity as the first passive magnetic materials 634 integrated into the first thrust bearing 615 and fourth passive magnetic materials 637 of a same polarity as the second passive magnetic materials 635 integrated into the second thrust bearing 618. In this case, passive magnetic repulsion between the first and third passive magnetic materials 634 and 636 and passive magnetic repulsion between the second and fourth passive magnetic materials 635 and 637 cooperatively maintain the axial location of the thrust disc 603 between the first and second top foils 611 and 613 (see FIG. 6).

With reference to FIG. 8, the first additional components 612 (see FIG. 6) can further include a first flange 801, which is outboard of the first top foil 611 and affixed to an outboard edge of the first thrust bearing 615 (see FIG. 6), and the second additional components 614 (see FIG. 6) can further include a second flange 802, which is outboard of the second top foil 613 and affixed to an outboard edge of the second thrust bearing 618 (see FIG. 6). In this case, the first and second flanges 801 and 802 can have passive magnetic materials integrated therein as in the embodiments of FIG. 6 or as in the embodiments of FIG. 7 (the embodiments of FIG. 8 correspond to the embodiments of FIG. 7; this is done for purposes of clarity and brevity and is not intended to otherwise limit the scope of this disclosure or the following claims) and passive magnetic repulsion(s) cooperatively maintain(s) the axial location of the thrust disc 603 between the first and second top foils 611 and 613 (see FIG. 6).

With continued reference to FIGS. 6, 7 and 8 and in accordance with embodiments, the various repulsive forces described herein can be equalized on either side of the thrust disc 603 or, in some cases, non-equalized (in a controlled or uncontrolled manner).

With continued reference to FIGS. 7 and 8, a device 750 is provided and includes the shaft 602, which is rotatable about the longitudinal axis A thereof, the thrust disc 603, which is disposed along the shaft 602 to rotate with the shaft 602, and a hybrid airfoil thrust bearing 601 as described above with reference to FIGS. 6 and 7 and with reference to FIG. 8. The device 750 can include a turbine wheel 751 connected to a first end of the shaft 602, a compressor wheel 752 connected to a second end of the shaft 602 and one or more journal bearings 753 disposed along at least one of the first and second ends of the shaft 602. In accordance with embodiments, the one or more journal bearings 753 can be provided as a hybrid airfoil bearing, such as the hybrid airfoil bearing 101 of FIGS. 1A, 1B and 1C or FIGS. 2A and 2B.

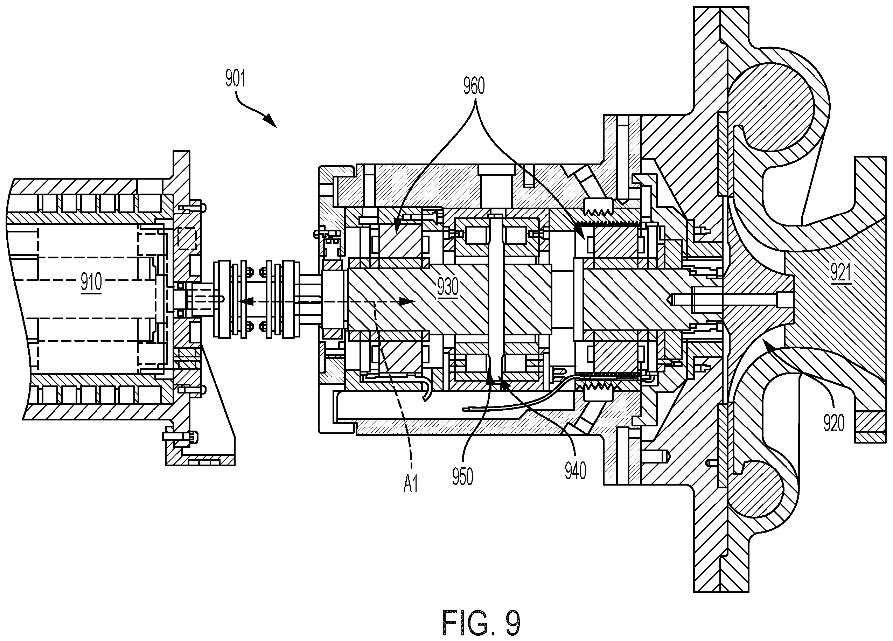

With reference to FIG. 9, an air cycle machine (ACM) 901 is provided and includes a motor 910, such as a high-speed motor, an impeller 920 with an inlet 921 and a rotor or shaft 930, which is rotatable about a longitudinal axis A1 thereof and by which the motor 910 drives rotation of the impeller 920. The ACM 901 further includes a thrust disc 940, which is disposed along the shaft 930 to rotate with the shaft 930 and a hybrid airfoil thrust bearing 950. The hybrid airfoil thrust bearing 950 can be configured in a substantially similar manner as the hybrid airfoil thrust bearing 601 of FIGS. 6 and 7 and of FIG. 8. The passive magnetic repulsion between the passive magnetic bearing components integrated into the thrust disc 940 and the passive magnetic bearing components integrated into the first and second additional components of the hybrid airfoil thrust bearing 601 as described above maintain an axial position of the thrust disc 940 between the motor 910 and the impeller 920. The ACM 901 can further include one or more journal bearings 960 disposed along the shaft 930 and, in accordance with embodiments, the one or more journal bearings 960 can be provided as a hybrid airfoil bearing, such as the hybrid airfoil bearing 101 of FIGS. 1A, 1B and 1C or FIGS. 2A and 2B.

Technical effects and benefits of the present disclosure are the provision of a hybrid airfoil thrust bearing that offers improved operation below a critical speed, increased bearing capacity, reduced or eliminated metal-to-metal contact in case of bearing overloading (e.g., due to rotor icing), increased bearing and machine (e.g., aviation motor, air cycle machine (ACM), etc.) durability and lifetime and a minimum impact on weight and costs of the machine.

The description of the present disclosure has been presented for purposes of illustration and description, but is not intended to be exhaustive or limited to the technical concepts in the form disclosed. Many modifications and variations will be apparent to those of ordinary skill in the art. The invention is defined by the appended claims.

## Claims

1. A hybrid airfoil thrust bearing for a shaft (602) comprising a thrust disc (603) that rotates with the shaft, the hybrid airfoil thrust bearing comprising:
airfoil bearing components (610) comprising:
a first top foil (611) immediately adjacent to a first side of the thrust disc and surrounding the shaft;
first additional components (612);
a second top foil (613) immediately adjacent to a second side of the thrust disc and surrounding the shaft; and
second additional components (614); and
passive magnetic bearing components (630) integrated into the thrust disc and into the first and second additional components to remove a static load of the thrust disc on the first top foil and on the second top foil;
wherein:
the first additional components comprise a first thrust bearing (615) defining a first bore (616), a first bump foil (617) axially interposed between the first top foil and the first thrust bearing and a first flange (801) outboard of the first top foil and affixed to an outboard edge of the first thrust bearing,
the second additional components comprise a second thrust bearing (618) defining a second bore (619) , a second bump foil (620) axially interposed between the second top foil and the second thrust bearing and a second flange (802) outboard of the second top foil and affixed to an outboard edge of the second thrust bearing, and
the shaft is rotatable about a longitudinal axis thereof within the first and second bores and relative to the first and second thrust bearings; and further
wherein the passive magnetic bearing components comprise:
first and second passive magnetic materials (632, 633) of opposite polarity integrated into the first and second sides of the thrust disc;
third passive magnetic materials (634) of a same polarity as the first passive magnetic materials integrated into the first flange; and
fourth passive magnetic materials (635) of a same polarity as the second passive magnetic materials integrated into the second flange.

2. A device, comprising:
a shaft (602) rotatable about a longitudinal axis thereof;
a thrust disc (603) disposed along the shaft to rotate with the shaft; and
a hybrid airfoil thrust bearing (601) as claimed in claim 1.

3. The device according to claim 2, further comprising:
a turbine wheel (751) connected to a first end of the shaft;
a compressor wheel (752) connected to a second end of the shaft; and
one or more journal bearings (753) disposed along at least one of the first and second ends of the shaft.

4. The device according to claim 3, wherein the one or more journal bearings is a hybrid airfoil bearing.

5. An air cycle machine, ACM, comprising:
a motor (910);
an impeller (920);
a shaft (602), which is rotatable about a longitudinal axis thereof and by which the motor drives impeller rotation;
a thrust disc (603) disposed along the shaft to rotate with the shaft; and
a hybrid airfoil thrust bearing (601) as claimed in claim 1.

6. The ACM according to claim 5, wherein passive magnetic repulsion between the passive magnetic bearing components integrated into the thrust disc and the passive magnetic bearing components integrated into the first and second additional components maintain an axial position of the thrust disc between the motor and the impeller.

7. The ACM according to claim 5 or 6, further comprising one or more journal bearings (753) disposed along the shaft.

8. The ACM according to claim 7, wherein the one or more journal bearings is a hybrid airfoil bearing.

## Patentansprüche

1. Hybridfolien-Axiallager für eine Welle (602), die eine Druckscheibe (603) umfasst, die mit der Welle rotiert, wobei das Hybridfolien-Axiallager umfasst:
Folienlagerkomponenten (610), umfassend:
eine erste Deckfolie (611), die unmittelbar benachbart zu einer ersten Seite der Druckscheibe ist und die Welle umgibt;
erste zusätzliche Komponenten (612);
eine zweite Deckfolie (613), die unmittelbar benachbart zu einer zweiten Seite der Druckscheibe ist und die Welle umgibt; und
zweite zusätzliche Komponenten (614); und
passive Magnetlagerkomponenten (630), die in die Druckscheibe und in die erste und die zweite zusätzliche Komponente integriert sind, um eine statische Last der Druckscheibe auf die erste Deckfolie und auf die zweite Deckfolie zu entfernen;
wobei:
die ersten zusätzlichen Komponenten ein erstes Axiallager (615), das eine erste Bohrung (616) definiert, eine erste Wellfolie (617), die axial zwischen der ersten Deckfolie und dem ersten Axiallager angeordnet ist, und einen ersten Flansch (801), der sich außerhalb der ersten Deckfolie befindet und an einer Außenkante des ersten Axiallagers befestigt ist, umfassen,
die zweiten zusätzlichen Komponenten ein zweites Axiallager (618), das eine zweite Bohrung (619) definiert, eine zweite Wellfolie (620), die axial zwischen der zweiten Deckfolie und dem zweiten Axiallager angeordnet ist, und einen zweiten Flansch (802), der sich außerhalb der zweiten Deckfolie befindet und an einer Außenkante des zweiten Axiallagers befestigt ist, umfassen, und
die Welle um eine Längsachse davon innerhalb der ersten und der zweiten Bohrung und relativ zu dem ersten und dem zweiten Axiallager drehbar ist; und ferner
wobei die passiven Magnetlagerkomponenten umfassen:
ein erstes und ein zweites passives magnetisches Material (632, 633) entgegengesetzter Polarität, die in die erste und die zweite Seite der Druckscheibe integriert sind;
dritte passive magnetische Materialien (634) einer gleichen Polarität wie die ersten passiven magnetischen Materialien, die in den ersten Flansch integriert sind; und
vierte passive magnetische Materialien (635) einer gleichen Polarität wie die zweiten passiven magnetischen Materialien, die in den zweiten Flansch integriert sind.

2. Vorrichtung, umfassend:
eine Welle (602), die um eine Längsachse davon drehbar ist;
eine Druckscheibe (603), die entlang der Welle angeordnet ist, um mit der Welle zu rotieren; und
ein Hybridfolien-Axiallager (601) nach Anspruch 1.

3. Vorrichtung nach Anspruch 2, weiterhin umfassend:
ein Turbinenrad (751), das mit einem ersten Ende der Welle verbunden ist;
ein Verdichterrad (752), das mit einem zweiten Ende der Welle verbunden ist; und
ein oder mehrere Radiallager (753), die entlang mindestens eines von dem ersten und dem zweiten Ende der Welle angeordnet sind.

4. Vorrichtung nach Anspruch 3, wobei das eine oder die mehreren Radiallager ein Hybridfolienlager ist.

5. Luftkreislaufmaschine, ACM, umfassend:
einen Motor (910);
ein Laufrad (920);
eine Welle (602), die um eine Längsachse davon drehbar ist und durch die der Motor eine Laufradrotation antreibt;
eine Druckscheibe (603), die entlang der Welle angeordnet ist, um mit der Welle zu rotieren; und
ein Hybridfolien-Axiallager (601) nach Anspruch 1.

6. ACM nach Anspruch 5, wobei eine passive magnetische Abstoßung zwischen den passiven Magnetlagerkomponenten, die in die Druckscheibe integriert sind, und den passiven Magnetlagerkomponenten, die in die erste und die zweite zusätzliche Komponente integriert sind, eine axiale Position der Druckscheibe zwischen dem Motor und dem Laufrad aufrechterhalten.

7. ACM nach Anspruch 5 oder 6, weiterhin umfassend ein oder mehrere Radiallager (753), die entlang der Welle angeordnet sind.

8. ACM nach Anspruch 7, wobei das eine oder die mehreren Radiallager ein Hybridfolienlager ist.

## Revendications

1. Palier de butée hybride aérodynamique pour un arbre (602) comprenant un disque (603) de butée qui tourne avec l'arbre, le palier de butée hybride aérodynamique comprenant :
des composants (610) de palier aérodynamique comprenant :
une première feuille (611) supérieure immédiatement adjacente à un premier côté du disque de butée et entourant l'arbre ;
des premiers composants (612) supplémentaires ;
une seconde feuille (613) supérieure immédiatement adjacente à un second côté du disque de butée et entourant l'arbre ; et
des seconds composants (614) supplémentaires ; et
des composants (630) de palier magnétique passif intégrés dans le disque de butée et dans les premiers et seconds composants supplémentaires pour supprimer une charge statique du disque de butée sur la première feuille supérieure et sur la seconde feuille supérieure ;
dans lequel :
les premiers composants supplémentaires comprennent un premier palier (615) de butée définissant un premier alésage (616), une première feuille (617) à bosses interposée axialement entre la première feuille supérieure et le premier palier de butée et une première bride (801) à l'extérieur de la première feuille supérieure et fixée à un bord extérieur du premier palier de butée,
les seconds composants supplémentaires comprennent un second palier (618) de butée définissant un second alésage (619), une seconde feuille (620) à bosses interposée axialement entre la seconde feuille supérieure et le second palier de butée, et une seconde bride (802) extérieure à la seconde feuille supérieure et fixée à un bord extérieur du second palier de butée, et
l'arbre est rotatif autour d'un axe longitudinal de celui-ci à l'intérieur des premier et second alésages et par rapport aux premier et second paliers de butée ; et en outre
dans lequel les composants de palier magnétique passif comprennent :
des premiers et deuxièmes matériaux (632, 633) magnétiques passifs de polarité opposée intégrés dans les premier et second côtés du disque de butée ;
des troisièmes matériaux (634) magnétiques passifs de même polarité que les premiers matériaux magnétiques passifs intégrés dans la première bride ; et
des quatrièmes matériaux (635) magnétiques passifs de même polarité que le deuxième matériau magnétique passif intégré dans la seconde bride.

2. Dispositif, comprenant :
un arbre (602) rotatif autour d'un axe longitudinal de celui-ci ;
un disque (603) de butée disposé le long de l'arbre pour tourner avec l'arbre ; et
un palier (601) de butée hybride aérodynamique selon la revendication 1.

3. Dispositif selon la revendication 2, comprenant en outre :
une roue (751) de turbine reliée à une première extrémité de l'arbre ;
une roue (752) de compresseur reliée à une seconde extrémité de l'arbre ; et
un ou plusieurs paliers (753) lisses disposés le long d'au moins l'une des première et seconde extrémités de l'arbre.

4. Dispositif selon la revendication 3, dans lequel les un ou plusieurs paliers lisses sont des paliers hybrides aérodynamiques.

5. Machine à cycle d'air (ACM), comprenant :
un moteur (910) ;
un impulseur (920) ;
un arbre (602), qui est rotatif autour d'un axe longitudinal de celui-ci et par lequel le moteur entraîne la rotation de l'impulseur ;
un disque (603) de butée disposé le long de l'arbre pour tourner avec l'arbre ; et
un palier (601) de butée hybride aérodynamique selon la revendication 1.

6. ACM selon la revendication 5, dans laquelle la répulsion magnétique passive entre les composants de palier magnétique passif intégrés dans le disque de butée et les composants de palier magnétique passif intégrés dans les premiers et seconds composants supplémentaires maintiennent une position axiale du disque de butée entre le moteur et l'impulseur.

7. ACM selon la revendication 5 ou 6, comprenant en outre un ou plusieurs paliers (753) lisses disposés le long de l'arbre.

8. ACM selon la revendication 7, dans laquelle les un ou plusieurs paliers lisses sont des paliers hybrides aérodynamiques.
